# EUROPÄISCHE PATENTSCHRIFT

(11) **EP 1 237 757 B1**
(45) Veröffentlichungstag und Bekanntmachung des Hinweises auf die Patenterteilung: **25.06.2003**
(21) Anmeldenummer: 00991078.7
(22) Anmeldetag: 15.12.2000
(51) Int. Cl.: B60R 21/01, F42B 3/18, H01F 38/14

(54) **INDUKTIV AKTIVIERBARE ZÜNDKAPSEL FÜR INSASSEN-RÜCKHALTESYSTEME UND PRÜFSCHALTUNG FÜR DIESE ZÜNDKAPSEL**
IGNITION CAPSULE, WHICH CAN BE INDUCTIVELY ACTIVATED, FOR OCCUPANT RESTRAINT SYSTEMS, AND A TEST CIRCUIT FOR SAID IGNITION CAPSULE
CAPSULE AMORCE A ACTIVATION PAR INDUCTION POUR SYSTEMES DE RETENUE DE PASSAGERS ET CIRCUIT DE CONTROLE PREVU POUR CETTE CAPSULE AMORCE

(30) Priorität: 17.12.1999 DE 19961134; 02.10.2000 DE 10048869
(43) Veröffentlichungstag der Anmeldung: 11.09.2002
(73) Patentinhaber: Schott Glas, 55122 Mainz (DE); CARL-ZEISS-STIFTUNG trading as SCHOTT GLAS, 55122 Mainz (DE)
(72) Erfinder: Dürschinger, Günter, 90768 Fürth (DE)
(86) Internationale Anmeldenummer: DE0004490
(87) Internationale Veröffentlichungsnummer: WO01044023

(56) Entgegenhaltungen:
- GB-A- 1 416 095
- US-A- 3 185 093
- US-A- 5 799 972

## Beschreibung

Die Erfindung betrifft eine induktiv aktivierbare Zündkapsel für den Gasgenerator eines Insassenrückhaltesystems in einem Kraftfahrzeug gemäß dem Oberbegriff des Anspruchs 1.

Eine derartige Zündkapsel ist aus der US 5 799 972 A bekannt. Bei diesem Stand der Technik ist in den Auslösestromkreis ein Transformator geschaltet, welcher die Zündkapsel von der Auslösestromquelle galvanisch trennt. In der GB 1 416 095 A ist eine Zündkapsel beschrieben, bei welcher die für den Zündvorgang erforderliche elektrische Energie ebenfalls induktiv eingekoppelt wird. Zu diesem Zweck ist außerhalb der Zündkapsel eine Primärwicklung angeordnet, während sich im Innern der Kapsel eine Sekundärwicklung befindet. Die beiden Enden der Sekundärwicklung tauchen voneinander beabstandet in ein elektrisch leitfähiges Zündmittel ein, welches durch den hindurchfließenden Strom zur Explosion gebracht wird. Schließlich ist aus der US 3 185 093 eine induktiv aktivierbare Zündkapsel für unterschiedliche Anwendungszwecke bekannt, bei der die Sekundärwicklung im Innern der Kapsel auf einen Kern aufgebracht ist und die Enden der Sekundärwicklung durch einen das Zündmittel durchsetzenden Widerstandsdraht verbunden sind.

Der Erfindung liegt die Aufgabe zugrunde, die induktiv aktivierbare Zündkapsel der eingangs genannten Art dahingehend weiterzubilden, dass Fehlzündungen infolge gebrochener oder korrodierter Widerstandsdrähte zuverlässig vermieden werden.

Diese Aufgabe wird durch die induktiv aktivierbare Zündkapsel mit den im Anspruch 1 aufgeführten Merkmalen gelöst. Vorteilhafte Weiterbildungen und Ausgestaltungen sind in den Unteransprüchen angegeben.

Der Erfindung liegt der Gedanke zugrunde, den dünnen, bruchgefährdeten Widerstandsdraht herkömmlicher Zündkapseln durch eine besonders einfache und gleichzeitig unempfindliche Konstruktion zu ersetzen.

Die Erfindung wird im folgenden anhand von Ausführungsbeispielen näher erläutert:

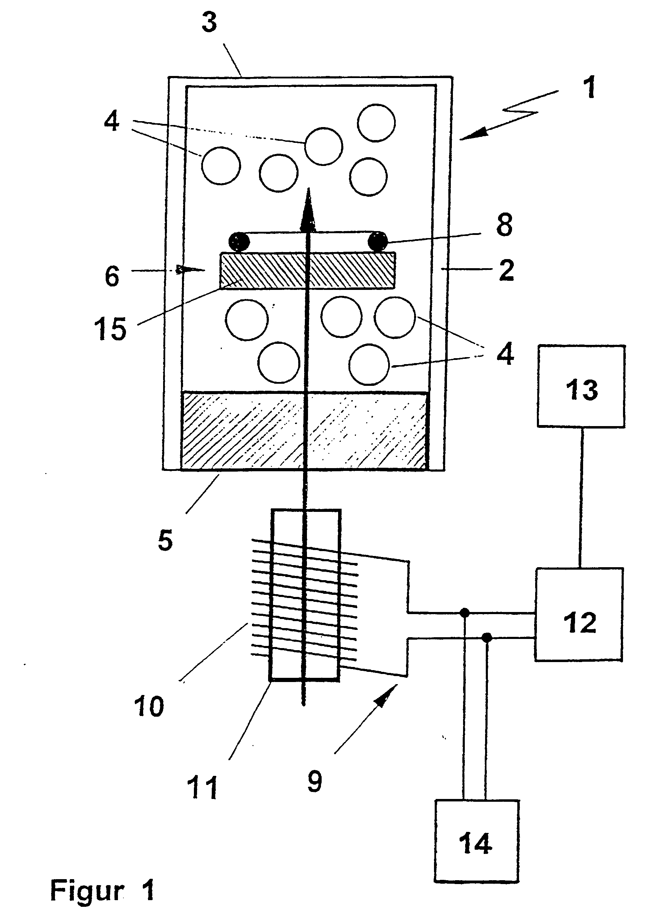

Figur 1 zeigt schematisch einen Schnitt durch die erfindungsgemäße Zündkapsel 1 sowie in Form eines Blockschaltbildes die zugehörige Auslöseschaltung 12 und eine Prüfschaltung 14. Die Zündkapsel 1 verfügt über ein topfförmiges Gehäuse 2, das zumindest teilweise mit einem Zündmittel 4 gefüllt ist. Die dem Innenraum des hier nicht gezeigten Gasgenerators zugewandte Oberseite der Zündkapsel 1 ist als Berstscheibe 3 ausgebildet oder weist Sollbruchstellen auf, so daβ sichergestellt ist, daß im Falle einer Fahrzeugkollision die heißen Explosionsgase rasch und zuverlässig in das Innere des Gasgenerators gelangen, wo sie die Treibladung zur Detonation bringen. Das Gehäuse 2 ist an seiner Unterseite durch einen Verschlusskörper 5 hermetisch verschlossen. Im Inneren des Gehäuses 2 befindet sich ein. in sich geschlossener Widerstandsdraht 8, der das Zündmittel 4 durchsetzt und der einen Sekundärstromkreis 6 bildet. Der Widerstandsdraht 8 ist auf einem Trägerplättchen 15 aus isolierendem oder schlecht leitendem Material aufgebracht. Elektrische Zuleitungen, die von außen in die Zündkapsel geführt sind und somit Ursache von Fehlzündungen sein können, sind somit nicht vorhanden. (Feuchtigkeit, elektrostatische Aufladungen oder Kriechströme) Außerhalb des Gehäuses 2 ist ein Kern 11 aus magnetischem oder magnetisierbarem Material, im folgenden kurz Magnetkern 11 genannt, angeordnet, welcher von einer Primärwicklung 10 umgeben ist. Der von der Primärwicklung 10 in Verbindung mit dem Magnetkern 11 erzeugte Magnetfluss ist durch einen Pfeil veranschaulicht, welcher den Verschlusskörper 5 der Zündkapsel 1 und den im Gehäuse 2 befindlichen, in sich geschlossenen Widerstandsdraht 8 durchsetzt. Die Windungszahl der Primärwicklung 10 ist so bemessen, dass im Sekundärstromkreis ein ausreichend starker Strom induziert wird, der den Widerstandsdraht 8 zuverlässig zum Glühen oder Schmelzen bringt und so die Explosion des Zündmittels 4 herbeiführt.
Die Primärwicklung 10 bildet zusammen mit einer Auslöseschaltung 12 einen Primärstromkreis 9. Die Auslöseschaltung 12 ist mit einem Aufprallsensor 13 verbunden. Im Falle einer Fahrzeugkollision gibt der Aufprallsensor 13 ein Signal an die Auslöseschaltung 12 ab, aufgrund dessen sie eine hinreichend große Wechselspannung erzeugt. Die Wechselspannung kann z.B. sinusförmig oder rechteckförmig sein. Entscheidend für das Funktionieren der Zündkapsel ist lediglich, daß infolge dieser Wechselspannung auf der Sekundärseite ein Wechselstrom induziert wird, der den Widerstandsdraht 8 ausreichend erhitzt.

Parallel zur Primärwicklung 10 ist eine Prüfschaltung 14 geschaltet. Diese erzeugt in regelmäßigen Zeitabständen, beispielsweise im Abstand von einigen Sekunden, oder aber kontinuierlich eine schwache Wechselspannung, deren Frequenz von der für die Zündung bereitgestellten Wechselspannung deutlich verschieden, beispielsweise also sehr viel höher sein kann. Solange der Widerstandsdraht 8 einen geschlossenen Sekundärstromkreis 6 bildet, dieser Stromkreis mit anderen Worten also intakt ist, wird die Prüfschaltung 14, sobald sie ihre Prüfsignale an die Primärwicklung 10 abgibt, in genau definierter Weise leistungsmäßig belastet.
Zur Verwirklichung der Prüfschaltung 14 bedarf es
neben einem Wechselspannungsgenerator für die Erzeugung der Prüfspannung also lediglich eines Schaltkreises, der eine Änderung der Belastung durch den Sekundärstromkreis erkennt und daraufhin ein Warnsignal, das z.B. optisch oder akustisch sein kann, abgibt. Ein Schaltkreis, bei welchem ein Prüfsignal induktiv in die Stromzuleitung einer herkömmlichen Zündkapsel
eines Airbags eingekoppelt wird, ist an sich schon aus der Druckschrift DE 38 12 633 C2 bekannt. Im unterschied zu diesem Stand der Technik wird das Prüfsignal bei der hier verwendeten Prüfschaltung in einen von der Umgebung elektrisch vollständig isolierten Sekundärkreis eingekoppelt, der durch den Widerstandsdraht 8 gebildet wird. Ein besonderer Vorteil dieser Anordnung ist darin zu sehen, daß das Prüfsignal, sofern es nur eine minimale Aufheizung des Widerstandsdrahtes bewirkt, durchaus auch ununterbrochen gesendet werden kann.

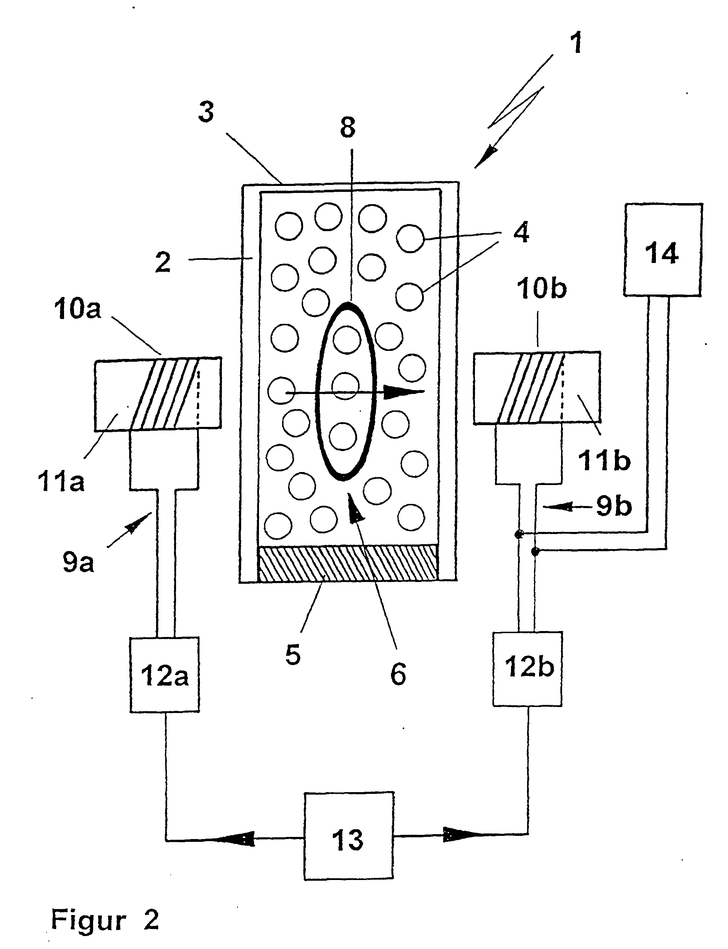

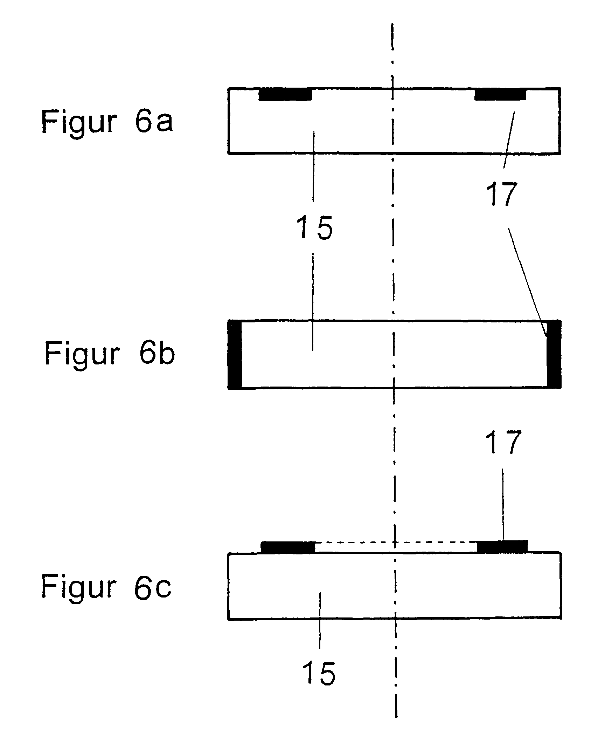

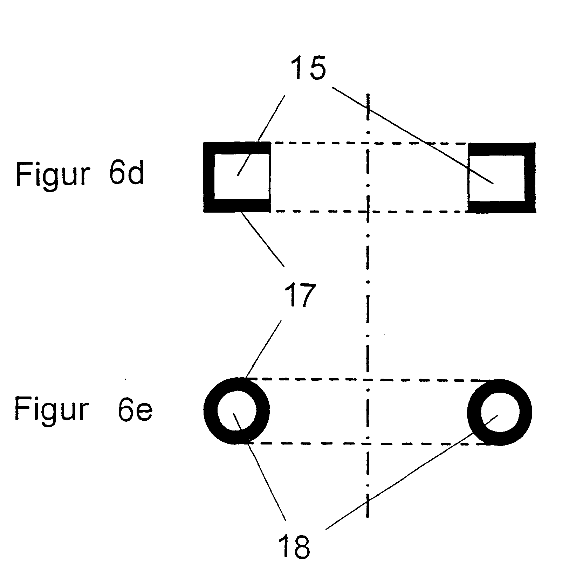

Bei dem in Figur 2 dargestellten Ausführungsbeispiel besteht der Sekundärstromkreis 6 der Zündkapsel 1 ebenfalls aus einem in sich geschlossenen Ring des Widerstandsdrahtes 8, wie er nachfolgend anhand der Figur 6 noch näher erläutert wird.

Zu beiden Seiten der Zündkapsel 1 sind eine erste Primärwicklung 10a und eine zweite Primärwicklung 10b mit jeweils einem Magnetkern 11a, 11b angeordnet. Die beiden Primärwicklungen 10a, 10b werden im Falle einer Fahrzeugkollision von zwei Auslöseschaltungen 12a, 12b in der oben bereits erörterten Weise mit Wechselstrom versorgt. Die hierbei erzeugten Magnetfelder durchsetzen den geschlossenen Ring aus Widerstandsdraht 8 gleichsinnig, was in der Figur 2 durch einen Pfeil symbolisiert ist, und induzieren den für die Zündung des Zündmittels 4 benötigten Heizstrom.

Diese spezielle Ausgestaltung der erfindungsgemäßen Zündkapsel ermöglicht einen sehr wirkungsvollen Schutz gegen Fehlzündungen, welche von Fehlern im Auslösestromkreis herrühren. Bemißt man nämlich die in den beiden Primärstromkreisen 9a, 9b fließenden Wechselströme so, daß erst das gleichzeitige Zusammenwirken beider den Widerstandsdraht 8 auf die erforderliche Zündtemperatur aufheizt, dann kann einer der Primärstromkreise in Folge technischer Fehler in Aktion treten, ohne daß es zu einer Fehlzündung mit fatalen Folgen kommt. Selbstverständlich kann die erfindungsgemäße Zündkapsel auch mit mehr als zwei zusammenwirkenden Primärstromkreisen ausgestattet sein. In einem bevorzugten Ausführungsbeispiel sind 4 Primärwicklungen um die Zündkapsel herum angeordnet, deren induktive Leistung so bemessen ist, daß erst das Zusammenwirken von 3 Primärstromkreisen zur Zündung führt. Das System bleibt also auch dann noch voll funktionsfähig, wenn einer der Primärstromkreise ausgefallen ist. Gleichzeitig werden Fehlzündungen sicher verhindert. Selbstverständlich kann mindestens einer der Primärstromkreise wieder mit der oben beschriebenen Prüfschaltung 14 ausgestattet sein.

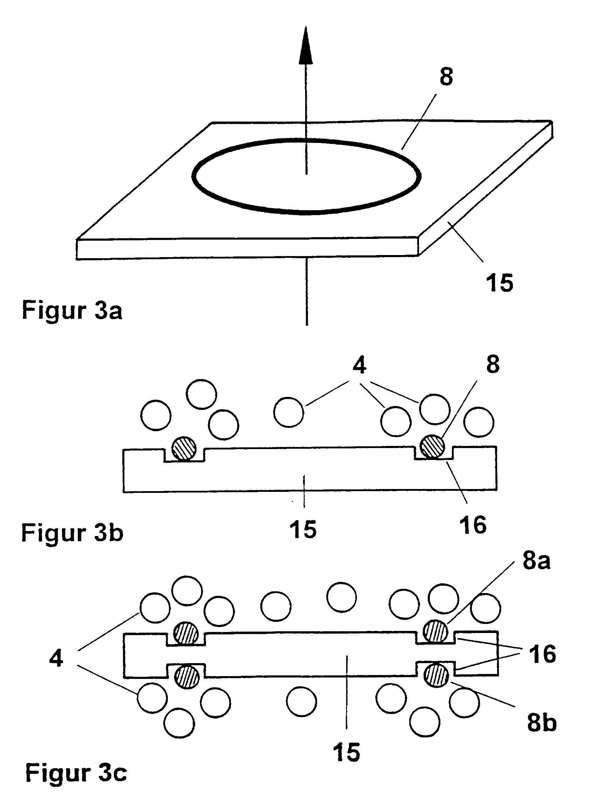

In Figur 3a ist perspektivisch dargestellt, wie sich der als geschlossene Leiterschleife ausgebildete Widerstandsdraht 8 sicher in der erfindungsgemäßen Zündkapsel 1 unterbringen läßt. Zu diesem Zweck ist der Widerstandsdraht 8 erfindungsgemäß auf einem Trägerplättchen 15 aus isolierendem oder schlecht leitendem Material fixiert. Der Pfeil verdeutlicht auch hier, wie der Sekundärstromkreis vom magnetischen Wechselfeld des Primärstromkreises zum Zwecke der induktiven Energieeinkopplung durchsetzt wird. Vorteilhaft ist es, wenn der Draht, wie in Figur 3b im Schnitt dargestellt, in eine Nut 16 des Trägerplättchens 15 eingelegt ist. Mit Bezugszeichen 4 ist wiederum das Zündmittel bezeichnet. Figur 3c zeigt im Schnitt ein weiteres Ausführungsbeispiel, bei dem zwei ringförmige Widerstandsdrähte 8a, 8b voneinander elektrisch isoliert zu beiden Seiten eines Trägerplättchens 15 angebracht sind. Fällt einer der Widerstandsdrähte z.B. durch Korrosion aus, bleibt die Zündkapsel gleichwohl voll funktionsfähig. Es versteht sich von selbst, daß auch mehrere Anordnungen der in Figur 3c gezeigten Art in einer erfindungsgemäßen Zündkapsel nebeneinander oder übereinander gestapelt untergebracht sein können. Besonders vorteilhaft ist es in diesem Falle, wenn das Gehäuse 2 der Zündkapsel 1 unmittelbar von der Primärwicklung 10; 10a, 10b umschlossen wird, d.h. als Wickelkörper für die Primärwicklung dient, wie dies im übrigen bereits aus der eingangs zitierten Druckschrift US 3 185 093 bekannt ist.

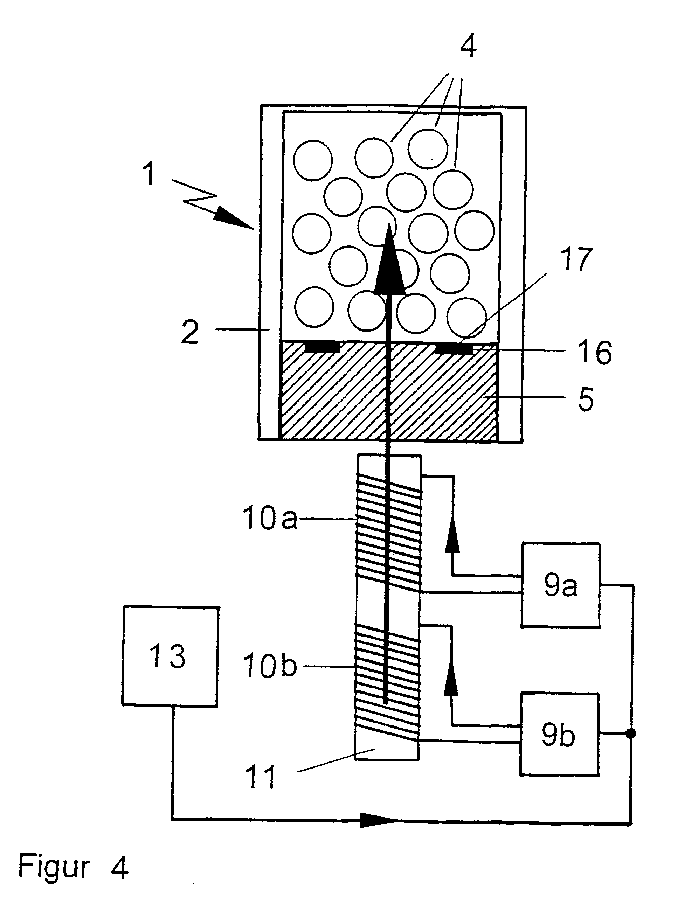

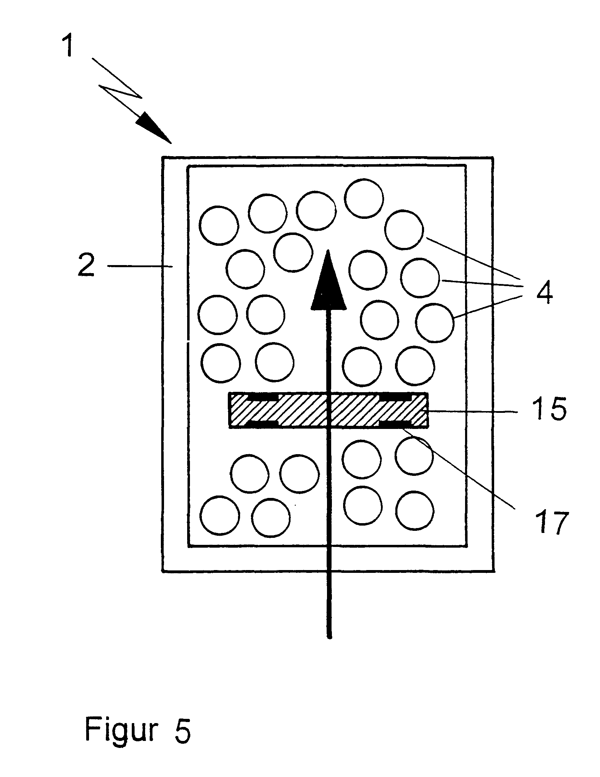

In der Figur 4 ist ein Schnitt durch eine weitere Ausführungsform einer erfindungsgemäßen, induktiv aktivierbaren Zündkapsel 1 skizziert. Die Zündkapsel 1 weist wiederum ein Gehäuse 2 auf, welches durch einen Verschlusskörper 5 hermetisch verschlossen ist. Der Verschlusskörper 5 übernimmt nunmehr die Rolle des Trägerplättchens 15 und ist wie dieses aus einem isolierendem oder schlecht leitendem Material gefertigt. In dem Verschlusskörper 5 ist eine in sich geschlossene Nut 16 eingebracht, die mit einer Metallschicht 17 gefüllt ist. Die Metallschicht 17 übernimmt die Rolle des bislang verwendeten, in sich geschlossenen Widerstandsdrahtes 8. Somit entsteht, ähnlich wie bei den Ausführungsbeispielen gemäß den Figuren 1 bis 3, eine aus genau einer Windung bestehende Sekundärwicklung, und die für die Zündung benötigte Heizleistung wird wiederum auf induktivem Wege in die Zündkapsel 1 eingekoppelt. Hierfür sind außerhalb der Zündkapsel 1 zwei Primärwicklungen 10a, 10b mit einer Vielzahl von Windungen vorgesehen, welche zur besseren Führung des magnetischen Flusses auf einen gemeinsamen Magnetkern 11 aufgewickelt sind. Im Falle einer Fahrzeugkollision gibt ein Aufprallsensor 13 ein durch einen Pfeil veranschaulichtes Signal an zwei Auslösestromkreise 9a, 9b, von denen jeder sodann einen Auslösewechselstrom in die ihm zugeordnete Primärwicklung 10a bzw. 10b schickt. Die ganze Anordnung ist so gestaltet, dass die von den beiden Primärwicklungen erzeugten magnetischen Flüsse zu jedem Zeitpunkt gleichgerichtet sind, dass insgesamt also durch Überlagerung ein resultierender Magnetfluss entsteht, der, wie der vertikale Pfeil andeuten soll, den Sekundärstromkreis möglichst verlustfrei durchsetzt. Die beiden Primärstromkreise sind, wie oben bereist ausführlich diskutiert wurde, aus Sicherheitsgründen so bemessen, dass die Heizleistung, die jeder einzelne auf induktivem Wege in den Sekundärstromkreis einkoppeln kann, nicht ausreicht, um das Zündmittel zur Explosion zu bringen. Fehlzündungen sind somit praktisch ausgeschlossen. Erst wenn beide Primärstromkreise durch ein Signal des Aufprallsensors 13 aktiviert werden, wird die Metallschicht 17 so stark erhitzt, dass es zur Zündung des Zündmittels 4 kommt. Von besonderem Vorteil kann es sein, jeden der beiden Primärstromkreise über einen gesonderten Aufprallsensor 13 anzusteuern. Es versteht sich von selbst, dass auch mehr als nur zwei Primärstromkreise verwendet werden können; in einer einfacheren Variante kommt die neuartige Zündkapsel natürlich auch mit einem einzigen Primärstromkreis aus.
Bei dem in Figur 5 gezeigten Ausführungsbeispiel wird die erfindungsgemäße Zündkapsel 1 nicht durch einen gesonderten Verschlusskörper 5 verschlossen, sondern weist ein bereits geschlossenes, beispielsweise verschweißtes Gehäuse 2 auf, in welchem sich das Zündmittel 4 befindet. Im Inneren des Gehäuses 2 der Zündkapsel 1 ist ein vom Zündmittel 4 umgebenes Trägerplättchen 15 aus isolierendem oder schlecht leitendem Material untergebracht, das auf jeder Seite eine ringförmige Nut 16 aufweist, in welche mindestens eine Metallschicht 17 eingebracht ist. Bei diesem Beispiel sind demnach zwei voneinander elektrisch isolierte Sekundärstromkreise vorhanden. Der vertikale Pfeil verdeutlicht wiederum den magnetischen Fluss, den die mindestens eine, hier allerdings nicht mehr dargestellte Primärwicklung im Falle einer Fahrzeugkollision erzeugt. Dieser magnetische Fluss induziert in den beiden Sekundärstromkreisen Ströme, durch welche beide aufgeheizt werden und so das Zündmittel 4 zur Explosion bringen. Die erfindungsgemäße Zündkapsel bleibt auch dann noch voll funktionsfähiq, wenn einer der beiden Sekundärstromkreise ausfällt.

In den Figuren 6a bis 6e schließlich sind jeweils als Schnitt fünf Möglichkeiten skizziert, wie sich der in sich geschlossene Widerstandsdraht 8 gemäß den Figuren 1 bis 3 alternativ realisieren lässt. Beim Ausführungsbeispiel gemäß der Figur 6a ist in ein Trägerplättchen 15 aus isolierendem oder schlecht leitendem Material wiederum eine in sich geschlossene Nut eingearbeitet, welche mit mindestens einer Metallschicht 17 verfüllt ist. Dies entspricht im wesentlichen dem Ausführungsbeispiel nach Figur 5, allerdings mit dem Unterschied, dass nunmehr nur eine einzige Sekundärwicklung vorgesehen ist. In der Ausführungsform nach Figur 6b umschließt die mindestens eine Metallschicht das Trägerplättchen 15 auf dessen Außenrand wie ein Radreifen. Figur 6c zeigt eine Alternative, bei der mindestens eine Metallschicht 17 unmittelbar auf die Oberfläche des Trägerplättchens 15 aufgebracht ist. Für diesen Fertigungsschritt kommen verschiedene Verfahren in Betracht, beispielsweise Aufdampfen unter Zuhilfenahme entsprechender Masken oder aber ein großflächiges Beschichten mit anschliessendem Herausätzen der gewünschten Leiterstruktur. Bei dem Ausführungsbeispiel nach Figur 6d wurde das Trägerplättchen 15 zunächst vollständig mit mindestens einer Metallschicht 17 überzogen und sodann mit einem Loch versehen, so dass nur noch eine ringförmige, in sich geschlossene Leiterstruktur übrig bleibt. Schließlich zeigt Figur 6e eine besonders bevorzugt Variante, bei welcher ein Ringkern 18 aus isolierendem oder schlecht leitendem Material die Rolle des bisherigen Trägerplättchens 15 übernimmt. Der Ringkern 18 ist mit mindestens einer Metallschicht 17 überzogen, so dass auch hier eine in sich geschlossene Leiterstruktur erhalten wird, welche den für die induktiv aktivierbare Zündkapsel erforderlichen Sekundärstromkreis bildet.

## Patentansprüche

1. Induktiv aktivierbare Zündkapsel für den Gasgenerator eines Insassen-Rückhaltesystems in einem Kraftfahrzeug, insbesondere für den Gasgenerator eines aufblasbaren Aufprallschutzkissens, mit einem topfförmigen Gehäuse (2), welches zumindest teilweise mit einem Zündmittel (4) gefüllt ist, wobei außerhalb des Gehäuses (2) mindestens ein Primärstromkreis (9; 9a, 9b) mit mindestens einer Primärwicklung (10; 10a, 10b) angeordnet ist, die im Falle einer Fahrzeugkollision mit einem Auslösestrom versorgt wird, und wobei innerhalb des Gehäuses (2) mindestens ein Sekundärstromkreis (6) vorgesehen ist, der mindestens eine Sekundärwicklung umfasst, welche mit der mindestens einen Primärwicklung (10; 10a, 10b) induktiv verkoppelt ist, **dadurch gekennzeichnet, dass** die mindestens eine Sekundärwicklung durch einen ringförmig geschlossenen Widerstandsdraht (8; 8a, 8b) gebildet wird, der auf einem Trägerplättchen (15) aus isolierendem oder schlecht leitendem Material angeordnet ist.

2. Induktiv aktivierbare Zündkapsel nach Anspruch 1, **dadurch gekennzeichnet, dass** das Trägerplättchen (15) aus Glas, Keramik oder Kunststoff besteht.

3. Induktiv aktivierbare Zündkapsel nach Anspruch 1 oder 2, **dadurch gekennzeichnet, dass** das Trägerplättchen (15) durch den Verschlusskörper (5) des Gehäuses (2) der Zündkapsel (1) gebildet wird.

4. Induktiv aktivierbare Zündkapsel nach einem der vorherigen Ansprüche , dass jede der Primärwicklungen (10; 10a, 10b) über einen Magnetkern (11; 11a, 11b) verfügt.

5. Induktiv aktivierbare Zündkapsel nach einem der vorherigen Ansprüche, **dadurch gekennzeichnet, dass** zwei ringförmig geschlossene Widerstandsdrähte (8a, 8b) elektrisch voneinander isoliert auf gegenüberliegenden Seiten des Trägerplättchens (15) angeordnet sind.

6. Induktiv aktivierbare Zündkapsel nach einem der vorherigen Ansprüche, **dadurch gekennzeichnet, dass** der ringförmig geschlossene Widerstandsdraht (8; 8a, 8b) durch mindestens eine Metallschicht (17) gebildet wird, welche auf dem Trägerplättchen (15) aufgebracht ist.

7. Induktiv aktivierbare Zündkapsel nach Anspruch 6, **dadurch gekennzeichnet, dass** der ringförmig geschlossene Widerstandsdraht (8; 8a, 8b) durch mindestens eine Metallschicht (17) gebildet wird, welche in eine Nut (16) des Trägerplättchens (15) eingebettet ist.

8. Induktiv aktivierbare Zündkapsel nach Anspruch 6, **dadurch gekennzeichnet, dass** das Trägerplättchen (15) in Form eines Ringkerns (18) ausgebildet ist, welcher von der mindestens einen Metallschicht (17) überzogen ist.

9. Induktiv aktivierbare Zündkapsel nach einem der vorherigen Ansprüche, **dadurch gekennzeichnet, dass** mindestens zwei Primärstromkreise (9a, 9b) sowie ein Sekundärstromkreis (6) vorgesehen sind, wobei die elektrische Leistung, die durch jeweils einen der Primärstromkreise (9a, 9b) in den Sekundärstromkreis eingekoppelt wird, so bemessen ist, dass das Zündmittel (4) nicht zur Explosion gebracht wird.

10. Induktiv aktivierbare Zündkapsel nach einem der vorherigen Ansprüche, **dadurch gekennzeichnet, dass** der Auslösestrom ein sinusförmiger oder rechteckförmiger Wechselstrom ist.

11. Induktiv aktivierbare Zündkapsel nach einem der Ansprüche 1 bis 10, **dadurch gekennzeichnet, dass** sie mit einer Prüfschaltung (14) verbunden ist, welche der mindestens einen Primärwicklung (10; 10a, 10b) parallel geschaltet ist und welche ein schwaches Wechselspannungssignal an die mindestens eine Primärwicklung (10; 10a, 10b) abgibt, wobei die Prüfschaltung eine Vorrichtung beinhaltet, welche eine Änderung des in der mindestens einen Primärwicklung (10; 10a, 10b) fließenden Wechselstromes erfasst.

12. Induktiv aktivierbare Zündkapsel nach Anspruch 11, **dadurch gekennzeichnet, dass** die Prüfschaltung (14) bei einer Änderung des in der mindestens einen Primärwicklung (10; 10a, 10b) fließenden Wechselstroms ein Alarmsignal erzeugt.

13. Induktiv aktivierbare Zündkapsel nach Anspruch 11 oder 12, **dadurch gekennzeichnet, dass** das schwache Wechselspannungssignal in regelmäßigen Zeitabständen oder kontinuierlich abgegeben wird.

14. Induktiv aktivierbare Zündkapsel nach einem der vorherigen Ansprüche, **dadurch gekennzeichnet,**
**dass** das Trägerplättchen (15) als Isolierschicht ausgebildet ist.

15. Induktiv aktivierbare Zündkapsel nach einem der vorherigen Ansprüche, **dadurch gekennzeichnet,**
**dass** das Gehäuse (2) durch einem Verschlusskörper (5) hermetisch verschlossen ist.

## Claims

1. Firing capsule, which can be activated inductively, for the gas generator of a vehicle-occupant restraint system in a motor vehicle, in particular for the gas generator of an inflatable impact protection cushion, having a pot-shaped housing (2) which is at least partially filled with a firing means (4), at least one primary circuit (9; 9a, 9b) with at least one primary winding (10; 10a, 10b) which is supplied with a triggering current in the event of a vehicle collision, being arranged outside the housing (2), and at least one secondary current (6) which comprises at least one secondary winding which is inductively coupled to the at least one primary winding (10; 10a, 10b) being provided inside the housing (2), **characterized in that** the at least one secondary winding is formed by a resistor wire (8; 8a, 8b) which is in the form of a continuous ring and which is arranged on a carrier (15) made of insulating or poorly conducting material.

2. Firing capsule, which can be activated inductively, according to Claim 1, **characterized in that** the carrier (15) is composed of glass, ceramic or plastic.

3. Firing capsule, which can be activated inductively, according to Claim 1 or 2, **characterized in that** the carrier (15) is formed by the closure element (5) of the housing (2) of the firing capsule (1).

4. Firing capsule, which can be activated inductively, according to one of the preceding claims, **characterized in that** each of the primary windings (10; 10a, 10b) has a magnetic core (11; 11a, 11b).

5. Firing capsule, which can be activated inductively, according to one of the preceding claims, **characterized in that** two resistance wires (8a, 8b) which are closed in an annular shape are arranged electrically insulated from one another on opposite sides of the carrier (15).

6. Firing capsule, which can be activated inductively, according to one of the preceding claims, **characterized in that** the resistance wire (8; 8a, 8b) which is closed in an annular shape is formed by at least one metal layer (17) which is applied to the carrier (15).

7. Firing capsule, which can be activated inductively, according to Claim 6, **characterized in that** the resistance wire (8; 8a, 8b) which is closed in an annular shape is formed by at least one metal layer (17) which is embedded in a groove (16) in the carrier (15).

8. Firing capsule, which can be activated inductively, according to Claim 6, **characterized in that** the carrier (15) is constructed in the form of an annular core (18) which is coated by the at least one metal layer (17).

9. Firing capsule, which can be activated inductively, according to one of the preceding claims, **characterized in that** at least two primary circuits (9a, 9b) and one secondary circuit (6) are provided, the electrical power which is fed into the secondary circuit by, in each case, one of the primary circuits (9a, 9b) being dimensioned in such a way that the firing means (4) is not made to explode.

10. Firing capsule, which can be activated inductively, according to one of the preceding claims, **characterized in that** the triggering current is a sinusoidal or square-wave oscillating current.

11. Firing capsule, which can be activated inductively, according to one of Claims 1 to 10, **characterized in that** it is connected to a test circuit (14) which is connected in parallel with the at least one primary winding (10; 10a, 10b) and which outputs a weak alternating voltage signal to the at least one primary winding (10; 10a, 10b) the test circuit including a device which senses a change in the alternating current which flows in the at least one primary winding (10; 10a, 10b).

12. Firing capsule, which can be activated inductively, according to Claim 11, **characterized in that** the test circuit (14) generates an alarm signal when there is a change in the alternating current flowing in the at least one primary winding (10; 10a, 10b).

13. Firing capsule, which can be activated inductively, according to Claim 11 or 12, **characterized in that** the weak alternating voltage signal is output at regular time intervals or continuously.

14. Firing capsule, which can be activated inductively, according to one of the preceding claims, **characterized in that** the carrier (15) is constructed as an insulating layer.

15. Firing capsule, which can be activated inductively, according to one of the preceding claims, **characterized in that** the housing (2) is hermetically sealed by means of a closure element (5).

## Revendications

1. Capsule amorce à activation par induction pour le générateur à gaz d'un système de retenue de passagers dans un véhicule automobile, notamment pour le générateur à gaz d'un coussin gonflable de protection anticollision, avec un boîtier (2) en forme de pot qui est rempli au moins en partie d'un produit d'amorçage (4), au moins un circuit électrique primaire (9 ; 9a, 9b) comportant au moins un enroulement primaire (10 ; 10a, 10b) étant disposé à l'extérieur du boîtier (2), lequel est alimenté par un courant de déclenchement en cas de collision du véhicule et au moins un circuit électrique secondaire (6) étant prévu à l'intérieur du boîtier (2), lequel comprend au moins un enroulement secondaire qui est couplé de manière inductive à l'au moins un enroulement primaire (10 ; 10a, 10b), **caractérisée en ce que** l'au moins un enroulement secondaire est constitué par un fil résistif (8 ; 8a, 8b) fermé en forme d'anneau qui est disposé sur une plaquette support (15) en matériau isolant ou mauvais conducteur.

2. Capsule amorce à activation par induction selon la revendication 1, **caractérisée en ce que** la plaquette support (15) est en verre, en céramique ou en matière plastique.

3. Capsule amorce à activation par induction selon la revendication 1 ou 2, **caractérisée en ce que** la plaquette support (15) est formée par le corps de fermeture (5) du boîtier (2) de la capsule amorce (1).

4. Capsule amorce à activation par induction selon l'une des revendications précédentes, **caractérisée en ce que** chacun des enroulements primaires (10 ; 10a, 10b) dispose d'un noyau magnétique (11 ; 11a, 11b).

5. Capsule amorce à activation par induction selon l'une des revendications précédentes, **caractérisée en ce que** deux fils résistifs (8a, 8b) fermés en forme d'anneau sont disposés sur des côtés opposés de la plaquette support (15) en étant isolés l'un de l'autre.

6. Capsule amorce à activation par induction selon l'une des revendications précédentes, **caractérisée en ce que** le fil résistif (8 ; 8a, 8b) fermé en forme d'anneau est constitué d'au moins une couche de métal (17) qui est appliquée sur la plaquette support (15).

7. Capsule amorce à activation par induction selon la revendication 6, **caractérisée en ce que** le fil résistif (8 ; 8a, 8b) fermé en forme d'anneau est constitué d'au moins une couche de métal (17) qui est intégrée dans une rainure (16) de la plaquette support (15).

8. Capsule amorce à activation par induction selon la revendication 6, **caractérisée en ce que** la plaquette support (15) est réalisée sous la forme d'un tore (18) qui est revêtu de l'au moins une couche de métal (17).

9. Capsule amorce à activation par induction selon l'une des revendications précédentes, **caractérisée en ce que** sont prévus au moins deux circuits électriques primaires (9a, 9b) et un circuit électrique secondaire (6), la puissance électrique qui est injectée dans le circuit électrique secondaire à chaque fois par l'un des circuits électriques primaires (9a, 9b) étant calibrée de telle manière que le produit d'amorçage (4) n'explose pas.

10. Capsule amorce à activation par induction selon l'une des revendications précédentes, **caractérisée en ce que** le courant de déclenchement est un courant alternatif sinusoïdal ou rectangulaire.

11. Capsule amorce à activation par induction selon l'une des revendications 1 à 10, **caractérisée en ce qu'**elle est reliée à un circuit de contrôle (14) qui est branché en parallèle avec l'au moins un enroulement primaire (10 ; 10a, 10b) et qui délivre un faible signal de tension alternative à l'au moins un enroulement primaire (10 ; 10a, 10b), le circuit de contrôle comprenant un dispositif qui détecte une modification du courant alternatif qui circule dans l'au moins un enroulement primaire (10 ; 10a, 10b).

12. Capsule amorce à activation par induction selon la revendication 11, **caractérisée en ce que** le circuit de contrôle (14) génère un signal d'alarme en cas de modification du courant alternatif qui circule dans l'au moins un enroulement primaire (10 ; 10a, 10b).

13. Capsule amorce à activation par induction selon la revendication 11 ou 12, **caractérisée en ce que** le faible signal de tension alternative est délivré à intervalles réguliers ou en continu.

14. Capsule amorce à activation par induction selon l'une des revendications précédentes, **caractérisée en ce que** la plaquette support (15) est réalisée sous la forme d'une couche isolante.

15. Capsule amorce à activation par induction selon l'une des revendications précédentes, **caractérisée en ce que** le boîtier (2) est fermé hermétiquement par un corps de fermeture (5) .3
